# FASCICULE DE BREVET EUROPEEN

(11) **EP 2 439 572 B1**
(45) Date de publication et mention de la délivrance du brevet: **27.08.2014**
(21) Numéro de dépôt: 11183636.7
(22) Date de dépôt: 30.09.2011
(51) Int. Cl.: G02B 6/44

(54) **Système de passage de câbles de fibres optiques**
Durchgangssystem für Faseroptikkabel
System for passing optical fibre cables

(30) Priorité: 08.10.2010 FR 1058177
(43) Date de publication de la demande: 11.04.2012
(73) Titulaire: Free Infrastructure, 75008 Paris (FR)
(72) Inventeur: Fortier, Eric, 77720 Aubepierre Ozouer Le Repos (FR); Binois, Johann, 78420 CARRIERES SUR SEINE (FR)
(74) Mandataire: Dupuis-Latour, Dominique

(56) Documents cités:
- US-A1- 2003 099 431
- US-B1- 6 259 851
- US-B1- 6 456 772
- US-B1- 7 418 186

## Description

L'invention concerne un système de passage de câbles de fibres optiques.

L'invention trouve une application particulièrement avantageuse dans le domaine du câblage d'immeubles pour la fourniture de services de communication haut-débit par fibres optiques.

Le câblage en fibres optiques d'un immeuble d'habitation, par exemple, dont certains occupants sont des abonnés à des services de communication haut-débit, est réalisé au moyen d'un faisceau de distribution qui parcourt l'immeuble le long d'une colonne montante de façon à pouvoir desservir les logements des abonnés. Outre le faisceau de distribution haut-débit, la colonne montante peut intégrer d'autres types de câbles, comme des câbles téléphoniques, de télévision, etc.

En général, un faisceau de distribution contient un grand nombre de câbles, dits câbles d'adduction, de 144 à 288 par exemple, chaque câble d'adduction étant destiné à être raccordé à un câble, dit câble d'abonné, installé dans le logement d'un abonné.

Un câble d'adduction comprend un certain nombre de fibres optiques individuelles, quatre par exemple, chargées de transporter les signaux optiques nécessaires pour assurer la communication haut-débit. Symétriquement, un câble d'abonné comprend également quatre fibres optiques, chaque fibre optique du câble d'adduction devant être raccordé à la fibre optique correspondante du câble d'abonné.

Dans un immeuble, ce raccordement est effectué, au niveau de chaque palier, dans un boîtier appelé boîtier de raccordement ou boîtier de palier (BDP). Plus précisément, le boîtier de palier est placé sur la colonne montante de façon à être traversé par le faisceau de distribution.

Un installateur chargé de réaliser le raccordement dégage du faisceau de distribution, à l'intérieur du boîtier, un ou plusieurs câbles d'adduction, en fonction du nombre d'abonnés à raccorder sur un même palier de l'immeuble. Chaque câble d'adduction est alors dénudé de manière à faire apparaître sur une longueur donnée les fibres optiques individuelles. La même opération est effectuée du côté abonné, à savoir mise à nu du câble d'abonné et séparation des fibres optiques individuelles.

Il faut ensuite raccorder effectivement chaque fibre optique d'un câble d'adduction à la fibre optique correspondante d'un câble d'abonné. La technique la plus utilisée dans ce but est celle de l'épissurage qui peut être réalisé sur un support amovible, appelé support d'épissures, tel que décrit par exemple dans le WO 2009/001013 A1 (Free SAS).

Avant d'effectuer l'opération d'épissurage proprement dite, l'installateur introduit à l'intérieur du boîtier de palier le câble d'abonné qu'il doit raccorder à un câble d'adduction préalablement dégagé du faisceau de distribution. A cet effet, le boîtier est muni d'un système de passage de câbles permettant d'introduire dans le boîtier une pluralité de câbles d'abonné, de les immobiliser et d'assurer l'étanchéité du système.

Le WO 2009/001013 A1 précité décrit aussi un système de passage de câbles constitué de deux parties complémentaires, à savoir une partie fixe en forme générale de pont comportant une pluralité d'arches séparées entre elles par des piliers, et une partie complémentaire démontable en forme générale de pont comportant également une pluralité d'arches séparées entre elles par des piliers. Les câbles sont enserrés entre les deux parties au niveau des arches qui, assemblées tête-bêche l'une à l'autre au niveau de leurs piliers, forment des orifices de passage de câbles sensiblement circulaires. Par ailleurs, des bagues d'étanchéité entourant les câbles sont placées dans les orifices de passage de manière à garantir l'étanchéité du système de passage de câbles.

Ce système connu présente cependant l'inconvénient que lorsque l'on doit ajouter un nouveau câble d'abonné dans le système de passage, il faut démonter le pont de la partie complémentaire du système, ce qui a pour conséquence de dégager en même temps les câbles déjà présents dans le système et de devoir les remettre en place avec le nouveau câble. De plus, on peut observer que l'étanchéité de ce système est réalisée au moyen de pièces supplémentaires spécialement dédiées à cette fonction, d'où un coût et une manipulation supplémentaires.

Le US 7 418 186 B1 décrit un autre système connu, comprenant des évidements permettant d'introduire latéralement les câbles à fibres optiques dans les orifices correspondants d'un module de passage en matériau élastique. Comme les trous traversants réalisés dans le bloc de matériau plastique constituant le module sont indépendants les uns des autres, l'introduction d'un nouveau câble à travers un trou libre du module de passage est sans conséquence sur le positionnement des câbles déjà en place dans d'autres trous.

Mais lorsque le module est comprimé pour bloquer en place les différents câbles, la présence de ces évidements introduit dans le diagramme de compression du matériau une discontinuité qui ne permet pas d'assurer un maintien optimal.

Cet inconvénient est particulièrement marqué dans le cas où le module est relativement court, car la compression autour des câbles n'est pas uniforme et l'on ne bénéficie plus d'un frottement suffisant entre le matériau du module et les câbles pour assurer un maintien à peu près satisfaisant de ces derniers.

Aussi, l'un des buts de l'invention est de proposer un système de passage de câbles de fibres optiques qui, tout en permettant d'introduire de nouveaux câbles dans le système en maintenant en place les câbles déjà présents, garantisse le maintien et l'étanchéité des passages de câbles en toutes circonstances, sans pièce spécifique à monter sur les câbles. Ce but est atteint par un système de passage de câbles de fibres optiques tel que divulgué par le US 7 418 186 B1 précité, c'est-à-dire comprenant, comme énoncé dans le préambule de la revendication 1 : un module monobloc de passage en matériau plastique élastiquement déformable, percé d'une pluralité de trous traversants sensiblement parallèles, chaque trou traversant étant destiné à recevoir un câble de fibres optiques ; et un moyen de compression du module, ce moyen de compression constituant également un moyen de fixation du module à un boîtier de raccordement de câbles de fibres optiques. Le module comporte des évidements pratiqués entre une surface de compression du module et les trous traversants adjacents.

De façon caractéristique, comme énoncé dans la partie caractérisante de la revendication 1, le moyen de compression comporte une patte de compression venant en appui sur la face supérieure du module, et pourvue de saillies aptes à pénétrer dans les évidements, complémentaires, du module et augmenter ainsi l'effet de compression de la patte.

Ces saillies présentent l'avantage de remplir complètement le volume du module, de sorte qu'il n'y subsiste aucun vide.

Elles viennent alors directement s'appliquer, à travers les évidements complémentaires de la surface de compression, sur les câbles présents dans les trous traversants adjacents afin de mieux les immobiliser.

La compression peut être ainsi rendue plus isotrope, et donc beaucoup plus efficace autour du câble (ou de la douille fantôme en cas d'absence de câble), même pour un module de traversée relativement peu épais, et donc beaucoup plus sujet aux irrégularités de compression.

L'invention propose également d'utiliser si besoin un jeu de douilles aptes à obturer des trous traversants du module inoccupés par un câble de fibres optiques.

Ce système de douilles réserve le passage de futurs câbles au moment de leur raccordement. De même, il contribue à garantir l'étanchéité du système de passage même en l'absence de câble dans certains trous traversants.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La Figure 1 a est une vue en perspective du module d'un système de passage de câbles à fibres optiques conforme à l'invention.
La Figure 1b est une vue de face, agrandie, du module de la Figure 1 a.
La Figure 1c est une vue de côté du module des Figures 1 a et 1 b.
La Figure 2a est une vue en perspective d'un jeu de douilles d'un système de passage de câbles à fibres optiques conforme à l'invention.
La Figure 2b est une vue de face, agrandie, du jeu de douilles de la Figure 2a.
La Figure 3 est une vue de face du module de la Figure 1b muni du jeu de douilles de la Figure 2b.
La Figure 4 est une vue partielle en perspective d'un boîtier de raccordement de câbles de fibres optiques muni du module de la Figure 3.
La Figure 5 est une vue en perspective du boîtier de raccordement de la Figure 4 montrant le module de passage prêt à recevoir un câble de fibres optiques.
La Figure 6 est une vue en perspective du boîtier de raccordement de la Figure 5 montrant le module équipé d'un câble de fibres optiques.
La Figure 7 est une vue de face du module montré à la Figure 6.

La description qui va suivre en regard des dessins annexés, donnés à titre d'exemples non limitatifs, fera bien comprendre en quoi consiste l'invention et comment elle peut être réalisée.

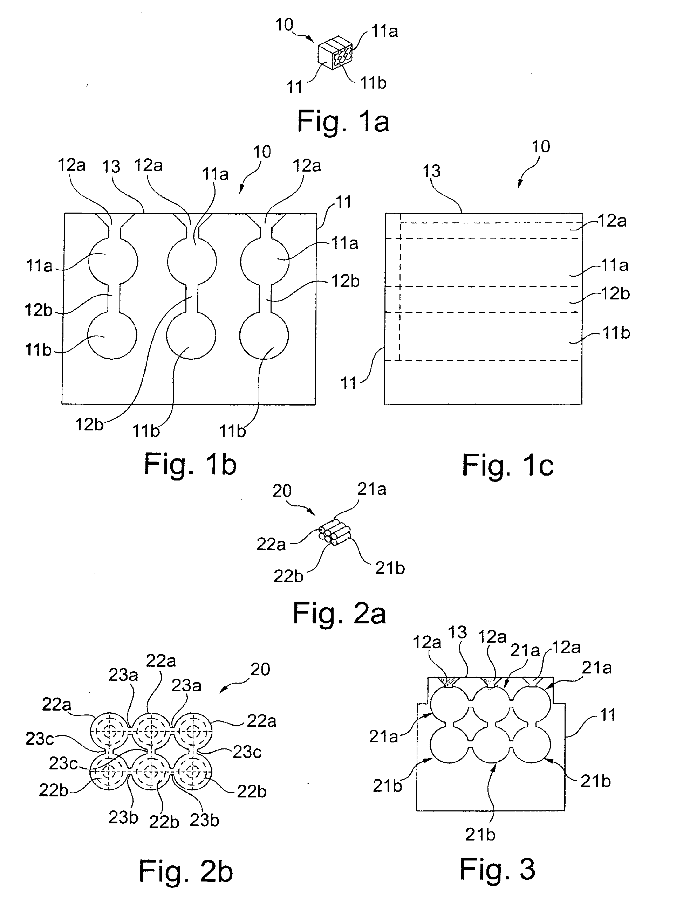

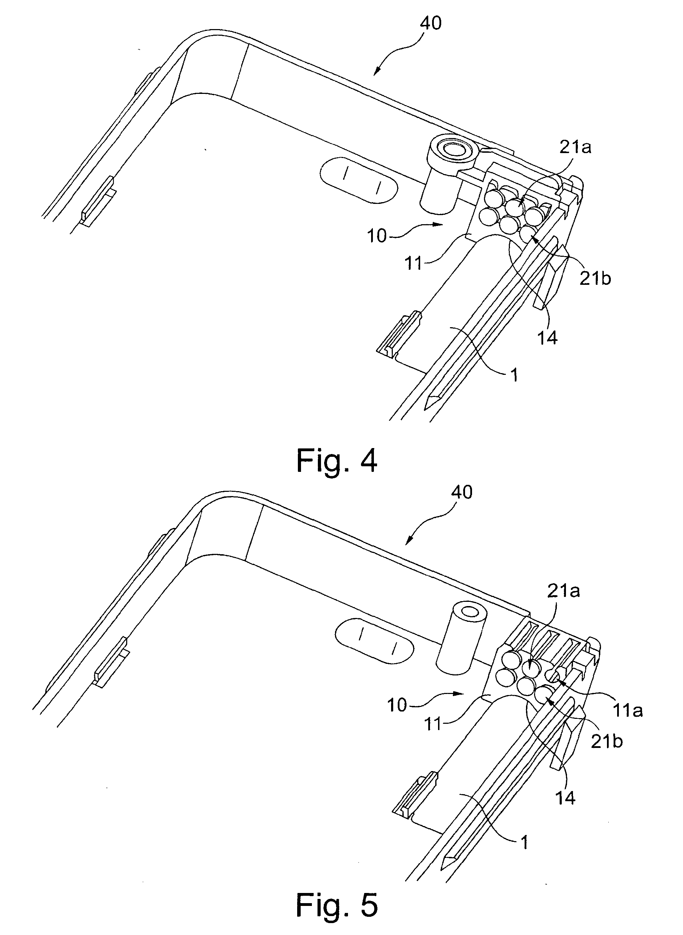

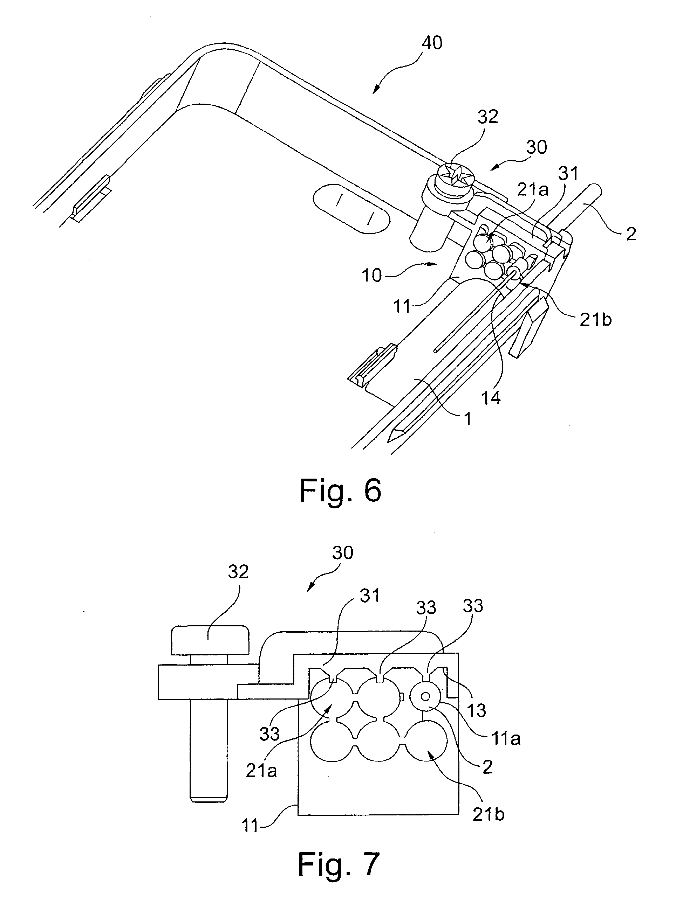

Sur les Figures 1a, 1b et 1c est représenté un module monobloc 10 constituant, avec le jeu 20 de douilles des Figures 2a et 2b et le moyen 30 de compression des Figures 6 et 7, un système de passage de câbles de fibres optiques dans un boîtier 40 de raccordement, ou de palier, tel que montré sur les Figures 4, 5 et 6.

Les câbles dont il s'agit sont plus précisément des câbles provenant des logements d'un même palier d'immeuble dont les occupants sont abonnés à des services de communication haut-débit par fibres optiques. Ces câbles, dits câbles d'abonné, sont destinés à être raccordés à l'intérieur du boîtier 40 à des câbles d'adduction transportés dans un faisceau de distribution parcourant la colonne montante de l'immeuble.

Le module 10 des Figures 1a, 1b et 1c se présente sous la forme d'un bloc 11 sensiblement parallélépipédique en matériau plastique, de préférence un élastomère thermoplastique (TPE). Ce bloc 10 est percé d'une pluralité de trous traversants 11 a, 11 b, ici au nombre de six, prévus pour recevoir et immobiliser six câbles d'abonné. L'indépendance des trous traversants 11 a, 11 b les uns par rapport aux autres a pour avantage que l'introduction d'un câble dans un trou traversant donné n'a aucun effet sur l'immobilisation du ou des câbles déjà présents dans d'autres trous, contrairement au système connu de l'état de la technique où les câbles sont maintenus au moyen d'un dispositif d'immobilisation commun, de sorte que pour introduire un nouveau câble il faut désengager les autres câbles du dispositif.

De plus, avec un ajustement serré des câbles dans les trous traversants 11 a, 11 b, et compte tenu que le module et la gaine des câbles sont en matériau plastique déformable, on garantit une excellente étanchéité du module 10 au niveau du passage des câbles, ceci sans avoir recours à des pièces supplémentaires dédiées à la seule étanchéité.

On peut voir plus particulièrement sur les Figures 1b et 1c des évidements 12b entre les trous 11 a et 11 b, et des évidements complémentaires 12a entre les trous 11a et la face 13, dite face supérieure, du module 10. Ces évidements permettent notamment de faciliter l'introduction des câbles dans les trous traversants en donnant au bloc 11 du module 10 une certaine élasticité.

La Figure 2b montre un jeu 20 de six douilles 21 a, 21 b configurées de sorte qu'elles puissent respectivement obturer les trous 11 a, 11 b inoccupés par un câble. De cette manière, l'étanchéité du module 10 de passage est garantie en toutes circonstances, que des câbles soient présents ou non dans les trous traversants 11 a, 11 b. On remarquera sur la Figure 2b que les douilles 21 a, 21 b sont solidarisées au moyen de ponts sécables 23a, 23b, 23c reliant les têtes 22a, 22b des douilles entre elles.

On peut voir sur la Figure 3 les douilles 21 a, 21 b dans leur position initiale dans le bloc 11, avant qu'un premier câble n'ait été introduit dans le module 10. Toutes les douilles sont en place dans les trous traversants dont aucun n'est occupé par un câble.

Dans le mode de réalisation particulier de la Figure 4, le module 10 de passage a été placé dans le boîtier 40 à l'aplomb du faisceau 1 de distribution contenant les câbles d'adduction. C'est pour limiter l'encombrement du module 10 que ce dernier présente une échancrure 14 s'emboîtant à cheval sur le faisceau 1. Pour des raisons de simplification, cette échancrure n'a pas été représentée sur les figures montrant isolément le module 10.

Lorsqu'un câble doit être introduit dans un trou traversant donné, la douille correspondante est séparée du reste du jeu 20 en cassant les ponts de liaison la reliant aux douilles restantes. C'est ce que montre la Figure 5 où l'on peut voir qu'une douille 21 a a été retirée pour dégager un trou traversant 11a et laisser la place à un câble d'abonné.

La Figure 6 montre un câble 2 d'abonné effectivement installé dans le trou traversant 11a du module 10 après retrait de la douille 21 a.

Afin d'assurer l'immobilisation du câble 2 dans le trou traversant 11a dans lequel il a été introduit, un moyen 30 de compression du module 10 est mis en oeuvre. Dans l'exemple de réalisation des Figures 6 et 7, ce moyen 30 de compression comprend une patte 31 de compression venant en appui sur la face supérieure 13 du module 10. La pression sur la patte 31 est exercée par un écrou 32 dont une extrémité porte un filetage engagé dans un trou taraudé ménagé dans le fond du boîtier 40.

On comprend que la patte 31 de compression et l'écrou 32 constituent également un moyen de fixation du module 10 de passage dans le boîtier 40 de palier.

Enfin, dans le but d'augmenter l'effet de compression de la patte 31, cette dernière est pourvue de saillies 33 aptes à pénétrer dans les évidements complémentaires 12a du module 10 de manière à pouvoir exercer directement la force de compression sur le câble 2 se trouvant dans un trou 11 a adjacent.

## Revendications

1. Système de passage de câbles de fibres optiques, comprenant :
- un module (10) monobloc de passage en matériau plastique élastiquement déformable, percé d'une pluralité de trous traversants (11a, 11 b) sensiblement parallèles, chaque trou traversant étant destiné à recevoir un câble de fibres optiques ; et
- un moyen (30) de compression du module, ce moyen de compression constituant également un moyen de fixation du module à un boîtier (40) de raccordement de câbles de fibres optiques,
le module (10) comportant des évidements (12a) pratiqués entre une surface (13) de compression du module (10) et les trous traversants adjacents (11a)
**caractérisé en ce que** :
- le moyen de compression comporte une patte de compression (31) venant en appui sur la face supérieure (13) du module, et pourvue de saillies (33) aptes à pénétrer dans les évidements (12a), complémentaires, du module et augmenter ainsi l'effet de compression de la patte.

2. Système selon la revendication 1, comprenant en outre un jeu (20) de douilles (21a, 21b) aptes à obturer des trous traversants du module inoccupés par un câble de fibres optiques.

## Patentansprüche

1. Durchgangssystem für faseroptische Kabel, das Folgendes umfasst:
- ein einstückiges Durchgangsmodul (10) aus einem elastisch verformbaren Kunststoffmaterial, das durch mehrere im Wesentlichen parallele Durchgangslöcher (11a, 11b) durchbohrt ist, wobei jedes Durchgangsloch ein faseroptisches Kabel aufnehmen soll; und
- ein Mittel (30) zum Komprimieren des Moduls, wobei dieses Mittel zum Komprimieren gleichzeitig ein Mittel zur Befestigung des Moduls an einer Anschlussdose (40) für faseroptische Kabel ist,
wobei das Modul (10) Aussparungen (12a) enthält, die zwischen einer Kompressionsfläche (13) des Moduls (10) und den benachbarten Durchgangslöchern (11a) ausgebildet sind,
**dadurch gekennzeichnet, dass**:
- das Kompressionsmittel eine Kompressionslasche (31) aufweist, die an der Oberseite (13) des Moduls zur Anlage kommt und mit Vorsprüngen (33) versehen ist, die in die komplementären Aussparungen (12a) des Moduls eindringen und so die Kompressionswirkung der Lasche erhöhen können.

2. System nach Anspruch 1, das des Weiteren einen Satz (20) von Hülsen (21a, 21b) umfasst, die nicht durch ein faseroptisches Kabel besetzte Durchgangslöcher des Moduls abdecken können.

## Claims

1. A system for the passage of fibre-optic cables, comprising:
- a single-part module of passage (10), made of an elastically-deformable plastic material, pierced by a plurality of substantially parallel through-holes (11a, 11b), each through-hole being intended to receive a fibre-optic cable; and
- a means (30) for the compression of the module, this compression means also forming a means for the fixation of the module to a casing (40) for the connection of fibre-optic cables,
the module (10) including recesses (12a) formed between a compression surface (13) of the module (10) and the adjacent through-holes (11a)
**characterized in that**:
- the compression means includes a compression tab (31) bearing on the upper face (13) of the module, and provided with protrusions (33) adapted to enter the complementary recesses (12a) of the module and to hence increase the effect of compression of the tab.

2. A system according to claim 1, further comprising a set (20) of bushes (21a, 21b) adapted to block through-holes of the module which are not occupied by a fibre-optic cable.
